# EUROPEAN PATENT APPLICATION

(11) **EP 0 920 165 A1**
(43) Date of publication of application: **02.06.1999**
(21) Application number: 97830634.8
(22) Date of filing: 28.11.1997
(51) Int. Cl.: H04M 1/00, H04M 3/50

(54) **Telephone answering system for special phone message services during the waiting time between the end of dialling and the answer of the called user**

(71) Applicant: Bonanno, Alfio, 90147 Palermo (IT); Galeano, Pietromaria, 90147 Palermo (IT)
(72) Inventor: Bonnanno, Alfio, 90147 Palermo (IT); Maffioli, Raffaele, 98064 Librizzi (IT)
(74) Representative: Sarpi, Maurizio

(57) **Abstract**

A telephone answering system for phone message services, characterized in that there are provided in combination means for sending to the calling user one or more audio messages during the waiting time before the answer of the called user, means for prestoring said messages, means for reproducing said messages, and means for selecting the messages to be reproduced. Said system provides means for replacing the ringing tone heard by the calling user when a not engaged called user has been reached with an audio signal consisting of the ringing tone itself and an advertising message inserted during the intervals of the waveform of such ringing tone so that the telephone line is used before the answer of the called user, i.e. before the calling user begins to pay.

## Description

The present invention relates to the field of the phone message services and more particularly a telephone system which can be connected both to the telephone network and the users, such a system being capable to send to the calling user one or more audio messages during the waiting time before the answer of the called user.
The invention seeks to seize an opportunity so far never used in the telephone networks (mainly because of law problems), i.e. the chance of using the transmission line for commercial purposes also during the time of connection between calling and called users.
The telephone line is currently utilized during the conversation by phone services of different kinds:
- central and personal answering machines which transmit to the calling user several messages after the connection;
- interactive and non-interactive services giving information during the conversation;
- an experimental phone service recently started in Sweden and in Italy (at Viareggio) and sending to both users several advertising messages during the conversation.

The present invention provides to replace the ringing tone heard by the calling user when the called telephone set is on-hook with an audio signal consisting of the ringing tone itself and an advertising message sent during the intervals of the waveform of such ringing tone. In this way, the telephone line is used before the answer of the called user, i.e. before the calling user begins to pay.
One object of the invention is to utilize for advertising purposes the waiting time between the end of dialling and the answer of the called user without any variation of the time of connection among calling user, telephone exchange, and called user.
A second object of the invention is to utilize such waiting time without any extension of the waiting time.
A third object of the invention is to allow a differentiation of the advertising messages according to the class of the calling user (business, domestic, and so on), the time and/or the country.

A better understanding of the invention will ensue from the following detailed description with reference to the accompanying drawings which show by way of a not limiting example a preferred embodiment thereof.
In the drawings:
Fig. 1 is a diagram showing the audio signal of the ringing tone as a function of the time;
Fig. 2 shows the audio signal of the ringing tone alternated with advertising messages according to the invention;
Fig. 3 is a schematic view of the connection of the apparatus according to the invention to the public network;

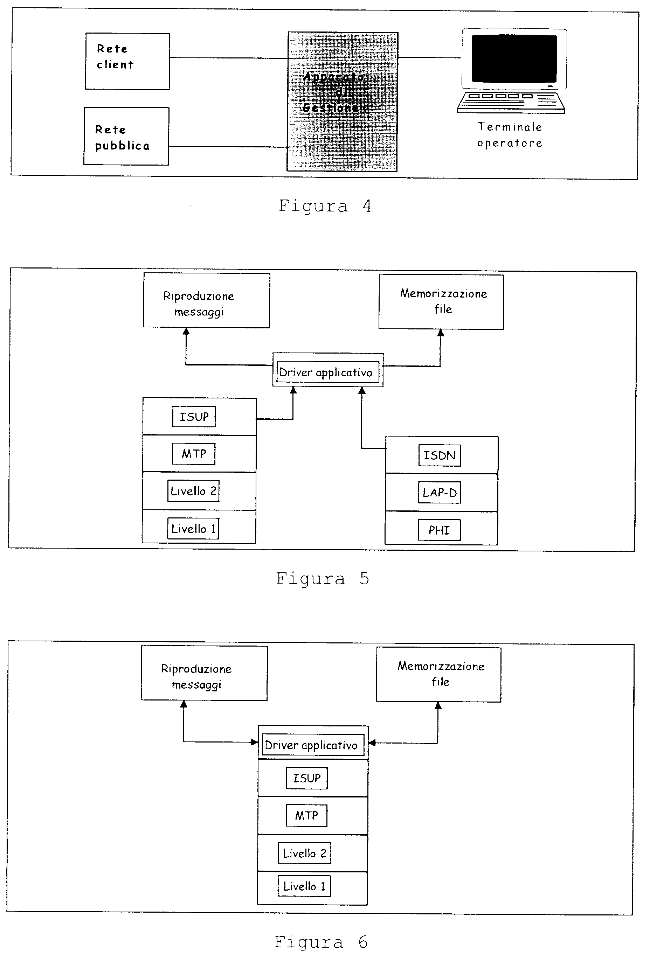

Fig. 4 shows the interfaces of the system to the outside;
Fig. 5 is an example of separate interface;
Fig. 6 is an example of a sole interface;
Fig. 7 shows a front view of the lay-out of the system;
Fig. 8 is a schematic view of the interface container according to a first configuration;
Fig. 9 is a schematic view of the schedule procedure of the application software relative to the message reproduction;
Fig. 10 shows a block diagram of the application software for the message reproduction;
Fig. 11 is a block diagram of the message reconfiguration apparatus;

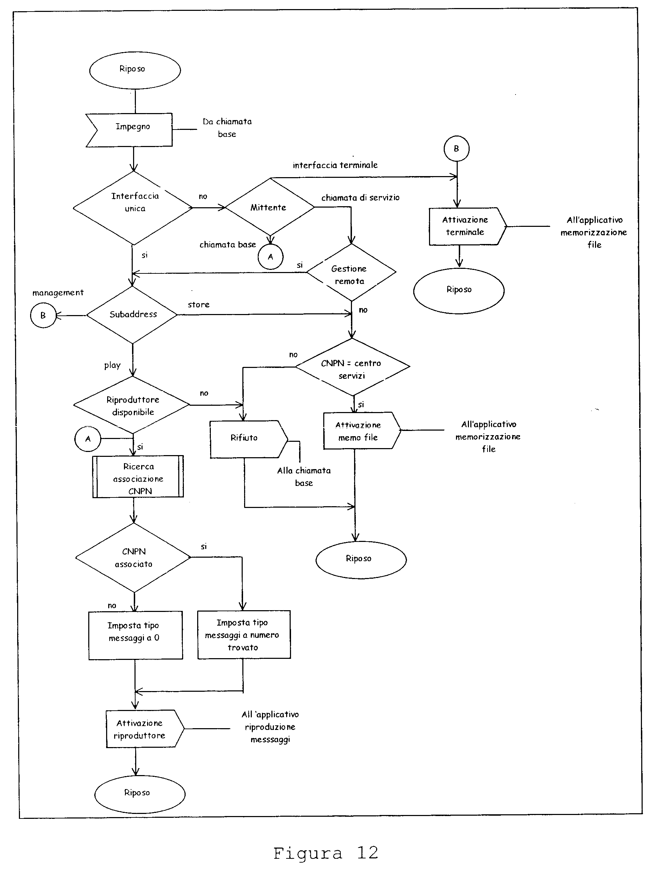

Fig. 12 is a block diagram of the application software driver;

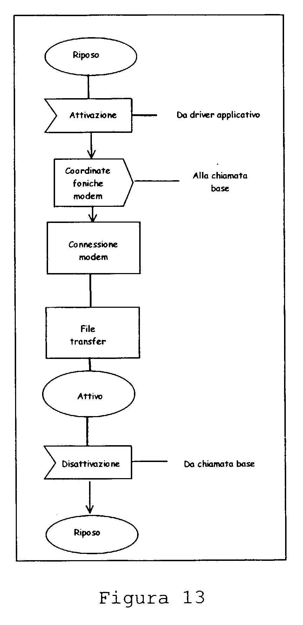

Fig. 13 is a block diagram of the file storage application software;

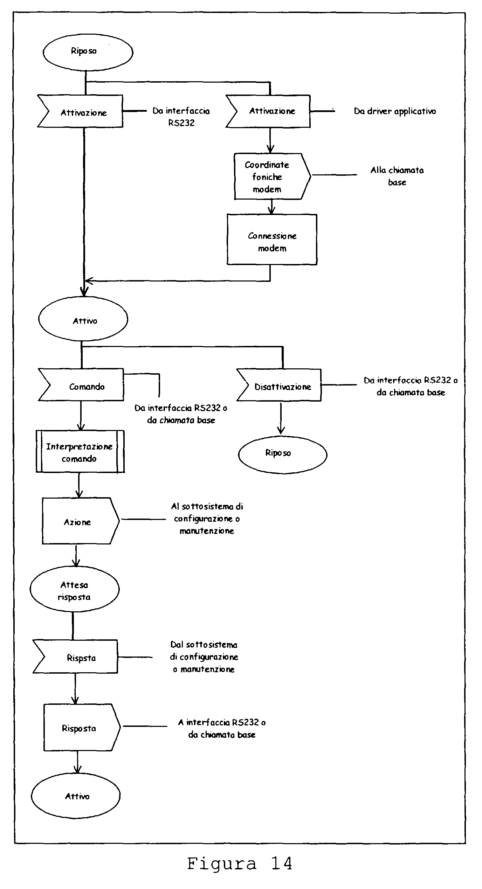

Fig. 14 is a block diagram of the terminal control application software;

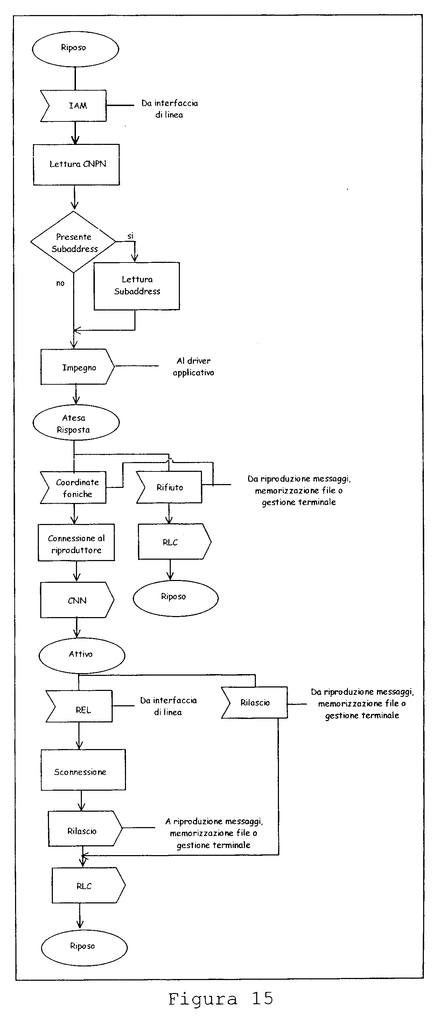

Fig. 15 shows a block diagram of the common channel signalling procedure;

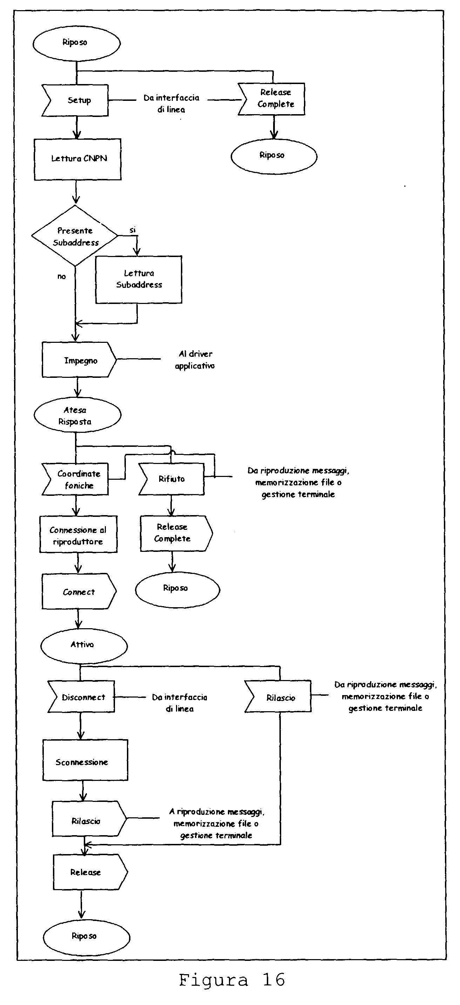

Fig. 16 is a block diagram of the ISDN signalling procedure.

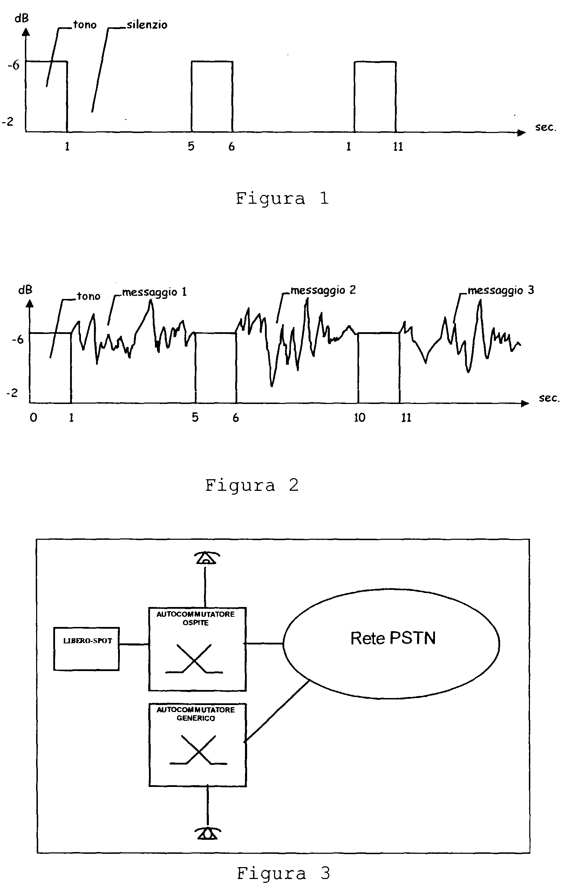

Before going into details it is convenient to briefly enumerate a plurality of acronyms and definitions which will be used hereinafter for the sake of brevity:
- CCSS # 7: Common Channel Signalling System Number 7
- CNPN: Calling Party Number
- FTP: File Transfer Protocol
- ISDN: Integrated Service Digital Network
- ISUP: ISDN User Part
- POTS: Plain Old Telephone Service
- PSTN: Public Switched Telephone Network
- Client network: Public or private network which is serviced by the system
- SDL: Specific and Description Language (according to CCITT Rules Z.100)
- LGS: Local-Group Stage
- TUP: Telephony User Part
The apparatus according to the invention can be connected both to public and private networks.
In order to be used for the purposes mentioned above the client network should modify its operation so as to be connected to the apparatus of the invention rather than the ringing tone generator. This is achieved in that when the client network detects that the called user has been reached (end-of-dialling state) and that he is not engaged (ringing state at the end-of-dialling), instead of sending the ringing tone generated by the network according to the waveform of Fig. 1 in voice band to the calling user the client network connects the calling user to the apparatus of the invention. The latter will supply the calling user with the waveform of Fig. 2.
Under normal conditions the end of the service is given by the following events:
- the calling user hangs up: in this case the client network concludes the main call and do not send audio signals to the apparatus any longer;
- the called user answers the telephone: in this case, when the answer of the called user is received by the client network, the latter does not send audio signals to the apparatus any longer and connects the calling user with the called user.

It should be appreciated that the apparatus of the invention is devised to satisfy, among others, the following specifications:
[1] CCITT Specifications (The International Telegraph and Telephone Consultative Committee) Q.767 "Application of the ISUP of CCITT SS#7 for International ISDN Connection (with annexes A, B, C, D, E)";
[2] CCITT Specifications (The International Telegraph and Telephone Consultative Committee) Q.721, Q722, Q723, Q724, Q725 "Application of the ISUP of CCITT SS#7 for International ISDN Connection";
[3] ETSI Specification (European Telecommunications Standards Institute) ETS 300-102 "ISDN Base Call".

As far as the public network is concerned the system can be directly connected to the autoswitch to which the user is connected or to a so-called "host" autoswitch to which the autoswitch connected to the user should be connected to perform the service (see Fig. 3) with the sole requirement that in case of remote access the two autoswitches are connected to the common channel signalling mode and that either the common channel signalling mode or primary access ISDN signalling mode is operated in any case for connecting the apparatus to the network.
As far as a private network is concerned, the system can be connected to one of the bundles from the exchange or to a bidirectional bundle (if the network consists of only one apparatus) or one of the apparatus forming the private network (if the network consists of a plurality of apparatus) provided that the network accepts the primary access ISDN.
Client network can be interfaced with the apparatus according to three different modes depending on strategic traffic and operation choices:
I. Call based connection: the client network establishes a service call to the apparatus whenever a ringing tone is provided for a given call and, during the ringing tone at the end of dialling, connects the calling user to the service call in voice band;
II. Semipermanent connection: upon starting or restarting of client network or when the apparatus is connected to the client network, the latter establishes semipermanent connections to the apparatus and uses them whenever the ringing tone is needed;
III. Mixed (semipermanent and call based connections): such a solution allows semipermanent and call based connections to be used under normal conditions and for special purposes, respectively.
According to the invention the structure of the system is as follows. The described apparatus is provided with three interfaces to the outside;
a) interface to client network;
b) service interface to the public network;
c) operator terminal.

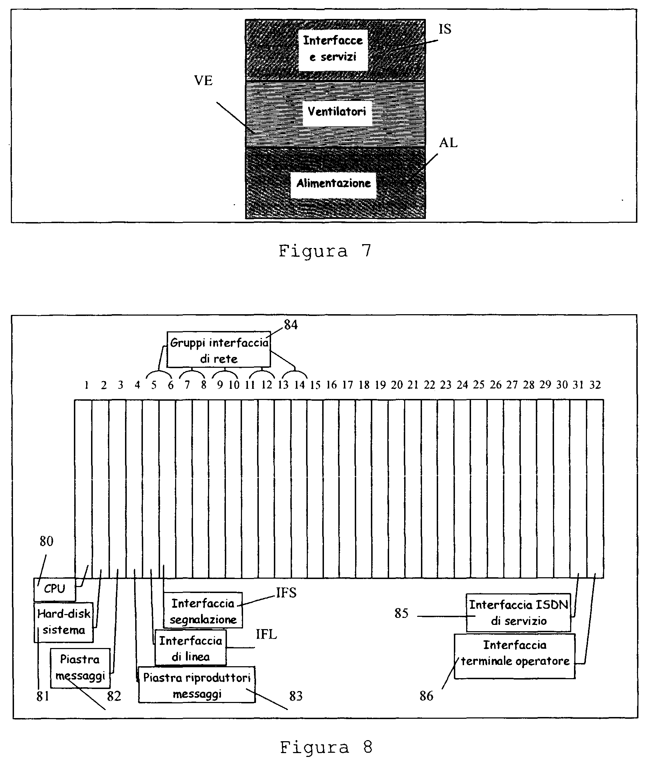

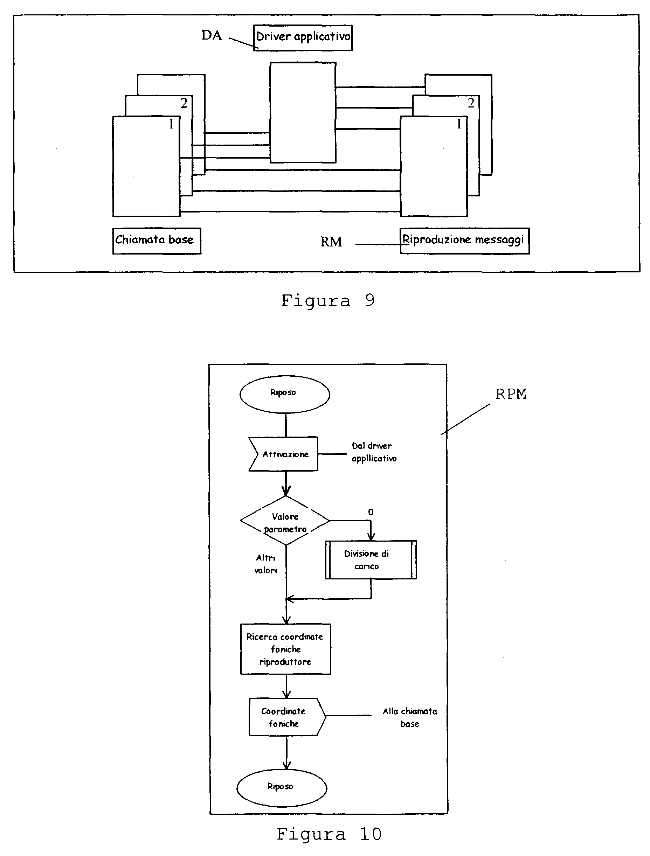

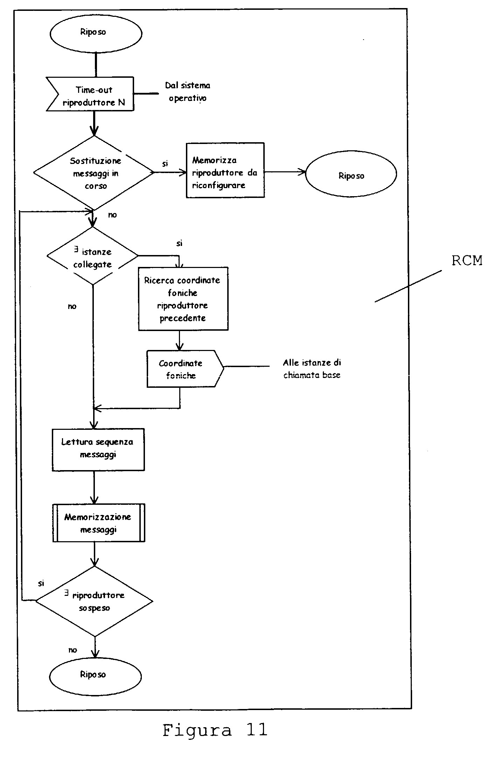

a) According to the client network to which the system is connected two different types of interface are provided:
   i) Common channel signalling CCSS#7 (TUP or ISUP) for public networks;
   ii) Primary access ISDN signalling for private or public networks.
   According to the signalling network protocol used the interface controls the incoming call to the system; upon receiving the engaging signal and once established the path of the audio signals, the system sends the answering criteria and provides the ringing tone to the selected receiver. The call can be then concluded because of either the hanging up by the calling side (public or private network) or a failure due to a breakdown or irregular operation sensed by the calling side or the system itself.
b) In case the system is a server of a private network, such service interface must be different and separate from the interface to the network. In case, however, of public client network, such two interfaces may be the same if a subaddressing service is used to address the main application (emission of audio signals) instead of the service application (audio signal down-load).
   More particularly, in case of separate interface there is provided an interface of base access ISDN type according to specification [3] or a POTS interface.
   Upon receiving the engaging signal by such interface the system arranges the path of the audio signal to the mass memory, sends the answer message and starts the application which stores the files sent through such connection.
   The calling procedure ends under normal conditions because of disconnection of the calling side.
   Otherwise, in case of one interface, it is necessary to use the subaddressing service to address the call to the message reproduction application rather than the application which stores the files. Therefore, the application driver will start the application concerned according to the subaddressing field of the IAM or Setup message (e.g. "play" for message reproduction and "store" for file storing).
c) The operator terminal can be directly connected via cable (RS232 interface) or the separate service interface or the sole interface to the network can be used also in this case according to what described above by utilizing another subaddress (e.g. "management") to identify the terminal management application.
   The operator terminal allows the apparatus to be outlined and managed. Some parameters for the desired operation can be modified or provided by means of a set of controls.
   Before thoroughly investigating the hardware/software structure of the invention it is necessary to appreciate that three different base configurations are provided depending on the client network to which the apparatus is connected:
   i) C1 configuration (connection to public network by call based connection):
      - network interface with ISUP signalling;
      - service interface;
      - only local interface for operator terminal.
   ii) C2 configuration (connection to ISDN private or public network by semipermanent connection):
      - network interface with ISUP signalling;
      - no service interface;
      - only local interface for operator terminal.
   iii) C3 configuration (connection to public network by mixed connections):
      - network interface with ISDN and ISUP signalling;
      - service interface;
      - even remote interface for operator terminal.
      As far as hardware is concerned the apparatus is housed in a subframe divided in 3 containers (Fig. 7):
      - a power supply container AL consisting of two power supplies (one in stand-by) having an input voltage of preferably -48 Vcc and supplying to the hardware subsystems a voltage of + 5 Vcc and + 12 Vcc depending on the operation;
      - a fan container VE;
      - an interface and service container IS which will be described herebelow.
      The interface and service container IS which is shown in Fig. 8 according to configuration C1 is the core of the system and consists of different parts:
      - a card including both CPUs 80 (one in backup) which control the operation of the whole apparatus;
      - a card so-called "system hard-disk" 81 including the application software of the system;
      - a card so-called "message card" 82 including a plug-in hard-disk in which the messages to be sent by the system are recorded, and the hardware for sound message reproduction;
      - an additional (optional) card 83 for sound message reproduction;
      - a number of network interfaces 84 (which can be varied according to size) each consisting of (configuration C1) a line interface card IFL for interfacing the network and controlling the audio channels for common channel signalling, and a signalling interface card IFS for interfacing the CPU and controlling the signalling. In the configuration C2 the network interface consists of a card controlling both audio channels and the signalling;
      - an ISDN interface card 85 (optional);
      - an interface card to operator terminal 86.
As far as the software is concerned the apparatus can be divided in eight software blocks, each of them has one or more functions performing the duties of the whole apparatus.
The message reproduction subsystem consists of message reproduction application software RPM (Fig. 10) and message reconfigurator RCM (Fig. 11). The message reproduction application software RPM is actuated by the application driver DA by means of a message including type of messages to be reproduced ( "0" for any message or "any number" for a specific type of message.
Upon receiving such message, the message reproducer RM to be connected to is selected according to the carried parameter (=0 or ≠0). If such parameter is "0", the selection of the reproducer is made according to load distribution method among reproducers.
In the preferred embodiment described herein the message reproducer is an EPROM which is loaded once every hour (default value) by message reconfigurator RCM with a sequence of fifteen messages (default value equal to the maximum number of ringing tones received during a call) defined in the message configuration file contained in the "message hard-disk".
Therefore, as explained hereinbefore, such reproducer plays continuously, e.g. for one hour, the same fifteen messages so that any call to that reproducer RM will receive the audio messages reproduced from the time of connection on.
Once selected the reproducer RM, the message reproduction request sends the audio coordinates of such reproducer to the base call request and switches off to the non-operating condition.
Message reconfigurator RCM is to be reprogrammed so that the reconfiguration of the reproducers RM is shifted in time (e.g. if the reproducers are twenty and the reconfiguration recurrence is one hour, the shifting can be three minutes). In addition, before starting the reconfiguration of a reproducer, all of the requests of the reproduction application software RPM connected to reproducer RM which is being about to be reconfigured should be connected to the reproducer RM which was the last to be reconfigured.
According to the invention reconfigurator RM also controls the step of remote loading of the messages or replacement of message hard-disk by a control light system. It should be appreciated that during such operation the reconfiguration of the reproducers RM should be interrupted until the end of such step. Thus reproducers RM continue to operate with the stored sequences.
The application driver is of the one-request type capable of addressing to upper application softwares. When such application software receives the engaging message from the call- based application software, it checks the service interface settings. If the "one interface" is set, the subaddress field sent in the message is checked. If such a field is "play" and there are resources for the reproduction of the messages, the application driver checks if the Calling Party Number field is included among those associated to a determined class of messages. In the affirmative, the corresponding value is used to fill the "type of reproducer" field to be introduced in the message to the message reproduction application software RPM; in the negative, such field is set to "any" value and is sent to the actuation message.
If the subaddress field is "store", the check of investigating that the Calling Party Number is relative to the service centre enabled to the file modification is made and, in the affirmative, the actuation message is sent to the file storage application software as described hereinafter.
If the subaddress field is "management", the actuation message is sent to the terminal management application software as described hereinafter.
Still in case the "one interface" option is not set for the engaging messages from the call-based application software, the Calling Party Number check is made for selecting the "type of reproducer" and the actuation message is sent to the message reproduction application software.
Finally, as far as the engaging messages from the service call application software is concerned, the setting of the "remote management" option is checked and, in the affirmative, the check of the subaddress field sent in the message is made and it is operated as indicated above for "store" and "management".
If however the "remote management" option is not set for the engaging messages from the service call application software, it is operated as if the subaddress field were set to "store", while for the engaging messages from the terminal interface it is operated as if the subaddress field were set to "management".
The management application software of the terminal provides the man-machine interface which allows the apparatus to be configured and managed through a local or remote operator terminal. It is actuated by a message from the line interface RS232 which connects the local terminal or from the application driver actuated in turn by a remote terminal call. Such man-machine interface is provided by applying the control signals from the terminal sent to the management application software of the terminal and giving the answers through suitable messages at the terminal. For the application of the control signals the terminal management application software holds a dialogue with the single application softwares of the configuration and maintenance subsystems.
As far as the configuration subsystem is concerned, when starting the system it is initialized with the default values of all of the parameters. It is then possible to modify the parameters necessary for the desired operation by the operator terminal.
The parameters which can be modified by the operator through a suitable control can be divided in classes:
- client network interface configuration:
   - type of interface;
   - number of interfaces;
- service interface configuration:
   - remote loading management: "managed" or "not managed" (only the replacement of the message hard-disk is supported);
   - presence of the separate service interface;
   - type of interface (POTS or ISDN);
   - utilization of the subaddress;
- operator terminal interface configuration:
   - remote interface management;
   - utilization of the subaddress;
- message reproduction subsystem configuration:
   - number of message reproducers;
   - number of recorded messages;
   - message sequence reconfiguration recurrence;
   - number of message in a sequence.

As far as the characteristics of the hardware and software components for the common channel TUP and ISUP signallings is concerned, reference is made to the specifications [1] and [2] with the following precise information.
Upon receiving the IAM message and after having carried out the procedures of searching the free circuit, the application software carrying out the common channel signalling detects in the message the parameters of the Calling Party Number and the Subaddress (if any), sends the actuation message to the application driver and waits for the answer of the application software concerned (message reproduction, terminal management or file storing).
Upon receiving such answer message, the application software for the common channel signalling establishes the audio connection (unidirectional or bidirectional according to the application software) and sends back the CNN message.
As soon as the application software receives the REL message from the client network, the path of the audio signals is disconnected, the previously engaged application software is released, RCL message is sent back and the signalling application software returns to the rest condition.
In addition to the special procedures listed in the reference specifications the signalling application software should provide the following cases:
- upon receiving a driver congestion message, the application software sends back a RLC message and releases the call;
- upon receiving a scheduled application software release message, the application software sends back a REL message and releases the call.
As far as the operation of the hardware and software components providing ISDN signalling is concerned, reference is made to specification [3].
Upon receiving Setup message the application software providing the ISDN signalling takes out from the message the parameters of Calling Party Number and Subaddress (if any), sends the actuation message to the application driver and waits for the answer of the application software concerned (message reproduction, terminal management or file storage). Upon receiving such a message, it establishes the audio connection (unidirectional or bidirectional according to the application software) and sends back the Connect message.
Upon receiving the Disconnect or Release message of the client network, the signalling application software disconnects the path of the audio signals, releases the previously engaged application software, concludes the call according to the protocol and returns to the rest condition.
In addition to the special procedures listed in the reference specifications, the signalling application software should provide the following cases:
- upon receiving a driver congestion message, the application software sends back a Release Complete message and releases the call;
- upon receiving a previously engaged application software release message, the application software sends back a Disconnect message and releases the call. Special procedures are provided in some parts of the system for fault location and any automatic reconfiguration of the whole system operation. Such procedures are carried out by a maintenance subsystem.
All of the events transmitted to the maintenance subsystem and any measure used are stored in a log-file which can be red from a terminal along with all of the specific information (subsystem type, failure type, and so on) and general information (date, time, and so on).
The most common failures will be briefly investigated herebelow.
If hardware detects it is not possible to start one reproducer (in case of call-based connection) or there is no audio signal in the connection to such a reproducer, it is provided that such event is signalled to the maintenance subsystem which in accordance with the reproducer reconfiguration program provided by the reconfigurator will ask the latter to switch over the just reconfigured reproducer the already established connections or those to be established to the former reproducer.
When a wrong operation of an interface portion or the network interface group is detected, all of the requests of the signalling application software which have established connections to that interface are informed by the maintenance subsystem so that such connections are released. Additionally, in the data base of the system that interface is designated as unusable.
In case of failure of a power supply the maintenance subsystem applies the "cold" restart procedure of the system, i.e. the system restarts by using the backup power supply and keeping the static configuration but loosing the dynamic configuration.
Both CPUs operates in double synchronization and are in backup to each other. Thus, in case of failure of a CPU the change-over does not provide any interruption of the operation of the system.
In order to monitor the operation of the whole system and the single subsystems it is possible to perform data collection procedures executed by the single application softwares in cooperation with the data collection application software; the collected data are then stored in a file of the message hard-disk and can be red thereafter by means of a suitable terminal control. Such monitoring is made by a measurement subsystem. The following measurement classes are provided:
A. Signalling events (requested for each interface group):
   - number of received engaging messages;
   - number of sent answering messages;
   - number of failure messages received before the answer;
   - number of failure messages sent before the answer.
B. Operation of the reproducers (requested for each reproducer):
   - number of requests connected to the reproducer;
   - number of failures of the reconfiguration;
C. Use of the messages (requested for each message):
   - number of connections for each message: start and end of the call-based connection are stored and what messages have been listened to can be ascertained by a following data processing.
      Finally, the requested proportioning of the components of the described apparatus which need such a specification is provided herebelow:
   - number of interfaces;
   - C1 configuration: 4 groups of interfaces of the ISUP or TUP type which may be increased to 12;
   - C2 configuration: 4 interfaces of the ISDN type which may be increased to 24;
      C3 configuration: 3 groups of interfaces of the ISUP or TUP type and 1 interface of the ISDN type which may be increased to 10 and 4, respectively;
   - hard-disk capacity: 2.1 Gbytes;
   - number of message reproducers: 20;
   - number of stored messages: supposing that each sequence formed of a ringing tone and a message has a duration of 5 seconds (as shown in Fig. 2) and that such a sequence is sampled at a frequency of 44 kHz and coded by 8 bits, each sequence consists of 22000 bytes; considering such sequences, 10000 messages can be stored on a disk having a capacity of 2.1 Gbytes, 98 Mbytes being still available for index files and auxiliary files.

Advantageously the invention has a great reliability because the whole apparatus has been designed with strength and recoverability typical of the servers for public and private networks. Actually, owing to the redundancy of the power supplies and the double synchronization operation of CPUs the service continuity which is absolute in case of failure of a CPU and partial in case of failure of the on-line power supply is guaranteed. In addition, the load distribution operation when using both reproducers and circuits (in case of call-based connection) ensures the availability of the service until at least a group of network interfaces and a reproducer are being operated.
Another advantage of the invention is given by the fact that the apparatus, because of its operation easiness and the limited number of controls, has characteristics of easy and quick understandability.
Furthermore, the apparatus may be used both as a whole and partially with different modes (e.g. call-based or permanent connection, remote loading or hard-disk replacement) so that it may be adapted for personal use.
Still another advantage of the invention is given by its efficiency. It should be appreciated that the design is related both to a plurality of different configurations and the best utilization of the current technology for storing and reproducing messages. It should not be neglected either the chance of using the system with semipermanent connections in order to ensure some performances of the client network as well as the chance of carrying out a reconfiguration of the messages without interrupting the service.
Additionally, as the predetermined sequence of messages in the reproducer is played continuously, two important requirements of the autoswitches are protected: the processing amount of the base call and the delay in the generation of the ringing tone. Actually, if in case of call-based connection the start of the audio signals shown in Fig. 2 should be made synchronous with the occurrence of the end-of dialling determined by the autoswitch, a considerable delay could be present in some cases in the generation of the ringing tone and since such a call is performed in series with the main call, it will considerably affect the processing amount of all of the base calls.
In case of semipermanent connection, however, a dialogue with a mark protocol is needed to make the two events synchronous.

## Claims

1. A telephone answering system for special phone services, characterized in that there are provided in combination means for sending to the calling user one or more audio messages during the waiting time before the answer of the called user, means for prestoring said messages, means for reproducing said messages, and means for selecting the messages to be reproduced.

2. The telephone answering system of claim 1, characterized in that there is provided means for replacing the ringing tone heard by the calling user when a not engaged called user has been reached with an audio signal consisting of the ringing tone itself and an advertising message inserted during the intervals of the waveform of such ringing tone so that the telephone line is used before the answer of the called user, i.e. before the calling user begins to pay.

3. The telephone answering system of the preceding claims, characterized in that the system is connected to the calling user when the public or private telephone network detects that the called user has been reached (end-of-dialling state) and that he is not engaged (ringing state at the end-of-dialling), said network being capable, instead of sending the ringing tone generated by the network, of connecting the calling user to the apparatus so that the latter sends to the calling user an audio signal formed of the ringing tone and audio messages during the intervals between subsequent ringing tones.

4. The telephone answering system of the preceding claims, characterized in that in a public telephone network the system can either be connected directly to the autoswitch to which the user is connected or to a so-called "host" autoswitch to which the autoswitch connected to the user has to be connected to perform the service so that in case of remote access the two autoswitches are connected to the common channel signalling mode and that either the common channel signalling mode or primary access ISDN signalling mode is operated in any case for connecting the apparatus to the network.

5. The telephone answering system of claims 1 to 3, characterized in that in a private network the system is connected to one of the bundles from the exchange or to a bidirectional bundle (if the network consists of only one apparatus) or one of the apparatus forming the private network (if the network consists of a plurality of apparatus) provided that the network accepts the primary access ISDN.

6. The telephone answering system of the preceding claims, characterized in that the client network can be interfaced to the apparatus according to three different modes depending on strategic traffic and operation choices, wherein said modes are:
I. Call based connection, in which the client network establishes a service call to the apparatus whenever a ringing tone is provided for a given call and, during the ringing state at the end of dialling, connects the calling user to the service call in voice band;
II. Semipermanent connection, in which upon starting or restarting of client network or when connecting apparatus and client network, the latter establishes semipermanent connections to the apparatus and uses them whenever the ringing tone is needed;
III. Mixed (semipermanent and call based connections), in which such a solution allows semipermanent and call based connections to be used under normal conditions and for special purposes, respectively.

7. The telephone answering system of the preceding claims, characterized in that it is provided with three interfaces to the outside:
a) interface to client network;
b) service interface to the public network;
c) operator terminal.

8. The telephone answering system of claim 7, characterized in that in case of interface to public networks a common channel CCSS#7 (TUP or ISUP) signalling interface is used.

9. The telephone answering system of claim 7, characterized in that in case of interface to private (or public) networks a primary access ISDN signalling interface is used.

10. The telephone answering system of the preceding claims, characterized in that there is provided a frame including in combination:
- a power supply container (AL) consisting of two power supplies (one in stand-by) having an input voltage of preferably -48 Vcc and supplying to the hardware subsystems a voltage of + 5 Vcc and + 12 Vcc depending on the operation;
- a fan container VE;
- an interface and service container IS.

11. The telephone answering system of claim 10, characterized in that said interface and service container (IS) includes:
- a card including both CPUs (80) (one in backup) which control the operation of the whole apparatus;
- a card so-called "system hard-disk" (81) including the application software of the system;
- a card so-called "message card" (82) including a plug-in hard-disk in which the messages to be sent by the system are recorded and the hardware for sound message reproduction;
- an additional (optional) card (83) for sound message reproduction;
- a number of network interfaces (84) for common channel signallings, each consisting of a line interface card (IFL) for interfacing the network and controlling the audio channels, and a signalling interface card (IFS) for controlling the signalling and interfacing the CPU;
- an ISDN interface card (85) (optional);
- an interface card to operator terminal (86).

12. The telephone answering system of claim 11, characterized in that said network interface (84) consists of a card for ISDN signalling which controls both the audio channels and the signalling.

13. The telephone answering system of the preceding claims, characterized in that the system is provided with a management software including several application softwares or subsystems, each of them provides one or more functions of the system.

14. The telephone answering system of the preceding claims, characterized in that said application softwares include a message reproduction subsystem consisting of a message reproduction application software (RPM) and a message reconfigurator (RCM).

15. The telephone answering system of the preceding claims, characterized in that said message reconfigurator RCM is actuated by an application driver (DA) by means of a message including the types of messages to be reproduced ("0" for any message or "any number" for a specific type of message), the message reproducer (RM) to be connected being selected according to the parameter (=0 or ≠0) included in the received message.

16. The telephone answering system of claim 15, characterized in that if said parameter is "0", the selection of the reproducer is made according to load distribution method among reproducers.

17. The telephone answering system of the preceding claims, characterized in that the message reproducer (RM) is an EPROM which is loaded once every hour (default value) by message reconfigurator (RCM) with a sequence of fifteen messages (default value equal to the maximum number of ringing tones received during a call) defined in the message configuration file contained in the "message hard-disk".

18. The telephone answering system of the preceding claims, characterized in that the management application software of the terminal providing the man-machine interface allows the apparatus to be configured and managed through a local or remote operator terminal which is actuated by a message either from the line interface RS232 which connects the local terminal or from the application driver actuated in turn by a remote terminal call, said man-machine interface being provided by applying the control signals from the terminal sent to the management application software of the terminal and giving the answers through suitable messages at the terminal.

19. The telephone answering system of the preceding claims, characterized in that for the application of the control signals the terminal management application software holds a dialogue with the single application softwares of the configuration and maintenance subsystems.

20. The telephone answering system of the preceding claims, characterized in that at the beginning the system is initialized by the subsystem with the default values of all of the parameters so as to then modify the parameters necessary for the desired operation by the operator terminal.

21. The telephone answering system of the preceding claims, characterized in that the parameters which can be modified by the operator through a suitable control can be divided in classes:
- client network interface configuration:
- type of interface;
- number of interfaces;
- service interface configuration:
- remote loading management: "managed" or "not managed" (only the replacement of the message hard-disk is supported);
- presence of the separate service interface;
- type of interface (POTS or ISDN);
- utilization of the subaddress;
- operator terminal interface configuration:
- remote interface management;
- utilization of the subaddress;
- message reproduction subsystem configuration:
- number of message reproducers;
- number of recorded messages;
- message sequence reconfiguration recurrence;
- number of message in a sequence.

22. The telephone answering system of the preceding claims, characterized in that in order to monitor the operation of the whole system and the single subsystems, a suitable measurement subsystem provides data collection procedures executed by the single application softwares in cooperation with the data collection application software, the collected data being then stored in a file of the message hard-disk and being red thereafter by means of a suitable terminal control.

23. The telephone answering system of the preceding claims, characterized in that said measurement subsystem provides the following measurement classes:
A. Signalling events (requested for each interface group):
- number of received engaging messages;
- number of sent answering messages;
- number of failure messages received before the answer;
- number of failure messages sent before the answer.
B. Operation of the reproducers (requested for each reproducer):
- number of requests connected to the reproducer;
- number of failures of the reconfiguration;
C. Use of the messages (requested for each message):
- number of connections for each message: start and end of the call-based connection being stored and determining what messages have been listened to by a following processing.
